(19) Europäisches Patentamt

European Patent Office

Office européen des brevets

(11) **EP 4 722 670 A1**

(12) **EUROPEAN PATENT APPLICATION**

(43) Date of publication:
   **08.04.2026   Bulletin 2026/15**

(21) Application number: 24204036.8

(22) Date of filing: **01.10.2024**

(51) International Patent Classification (IPC):
   **G01J 5/00** *(2022.01)*     **G01J 5/80** *(2022.01)*

(52) Cooperative Patent Classification (CPC):
   **G01J 5/007; G01J 5/80; G01J 5/802; G01J 5/804;**
   G01J 2005/0077

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(71) Applicant: **OroraTech GmbH**
   **81669 München (DE)**

(72) Inventors:
   • **Mollière, Christian**
     **81373 München (DE)**
   • **Liesenhoff, Lukas**
     **80469 München (DE)**

(74) Representative: **Michalski Hüttermann & Partner
   Patentanwälte mbB
   Kaistraße 16A
   40221 Düsseldorf (DE)**

Remarks:
   Amended claims in accordance with Rule 137(2)
   EPC.

(54) **A METHOD AND AN APPARATUS OF CALIBRATING A THERMAL SATELLITE FOR MEASURING LAND SURFACE TEMPERATURE**

(57)     According to the invention, a method of calibrating a thermal satellite for measuring land surface temperature, LST, is provided the method comprising:
calculating (S101) a preliminary LST product ($T$) based on data acquired by the satellite,
for a location point included in the preliminary LST product ($T$), obtaining (S102) a reference surface temperature ($R_i$) of a same time from a weather model,
calculating (S103) a radiance measurement offset ($d$) based on the reference surface temperature ($R_i$),
determining (S104) a calibrated radiance measurements ($L_{corr}$) of the thermal satellite based on the radiance measurement offset $d$, and
calculating (S105) a calibrated LST product ($T_{corr}$) based on the calibrated radiance measurements ($L_{corr}$).

    In this way, solutions may be developed that enable dynamic calibration of thermal satellites in real time across their entire orbit, thus resulting in more reliable and precise LST measurements.

Fig. 1

**Description**

The invention relates to the technical filed of thermal satellite calibration. Particularly, it relates to a method, an apparatus, a computer program product and a computer readable storage medium of calibrating a thermal satellite for measuring land surface temperature (LST).

Land surface temperature is the temperature of the Earth's surface, including soil, vegetation, and urban structures. As a key variable in environmental monitoring, LST represents how hot the surface would feel and is influenced by factors like solar radiation, land cover type, soil moisture, and human activities.

LST data is primarily obtained through thermal satellite remote sensing. Measuring LST with thermal satellite remote sensing generally involves detecting emitted thermal infrared radiation from the Earth's surface. Satellites, such as Landsat, MODIS, and Sentinel-3, use thermal sensors to capture data in the infrared spectrum, which is then processed to calculate land surface temperatures via radiative transfer equation. This method allows for continuous, large-scale monitoring of LST across diverse landscapes and observation of LST variations over time and space, helping to identify patterns like urban heat islands or drought conditions.

Generally, the remote sensing data is converted into brightness temperatures representing thermal radiations under the assumption that the surface behaves like a perfect blackbody. Then, the brightness temperatures are further refined with surface emissivity and atmosphere effects to calculate accurate LST. The calculation of LST based on thermal satellite images is subject to a number of uncertainty factors including different emissivity of the surface material, atmospheric disturbances and temperature effects on the satellite itself. Especially, with newer generations of thermal instruments, which use uncooled microbolometers, heating or cooling of parts on the satellite can significantly disturb the temperature measurements and thus cause large inaccuracies.

Conventional calibration technologies have assumed constant effects over the entire orbit of the satellite and attempt to calibrate the thermal sensor of the satellite using images of the moon and deep space. However, even under controlled measurement conditions, discrepancies can arise between images captured at different orbital positions, which are not always easily explained by measurable environmental factors. For instance, measurements may be affected by uncooled microbolometers. As a result, despite calibration using conventional methods, there is often a significant deviation between the land surface temperature derived from remote sensing data and the LST recorded by ground stations.

Thus, it is the object of the invention to develop solutions that enable dynamic calibration of thermal satellites in real time across their entire orbit, thus resulting in more reliable and precise LST measurements.

According to the invention, this object is addressed by the subject matter of the independent claims. Further embodiments of the invention are described in the dependent claims.

According to a first aspect of the present invention, a method of calibrating a thermal satellite for measuring LST is provided. The method proposes to calculate a preliminary LST product based on data acquired by the thermal satellite, obtain a reference surface temperature of a same time from a weather model for at least one location point included in the preliminary LST product, calculate a radiance measurement offset based on the reference surface temperature. Then based on the radiance measurement offset, the method determines a calibrated radiance measurements of the thermal satellite and calculating a calibrated LST product based on the calibrated radiance measurements.

This method, at least partially, may be a computer-implemented method.

By calibrating the thermal satellite in LST measurements with reference to surface temperature recorded at the same location and time, it is possible to eliminate the discrepancies resulted from different orbit positions, enable scene-specific calibrations and thus improving the accuracy of the LST measurements. Moreover, the method may be applied to surfaces with different emissivity and further improves the accuracy of the calibration.

In one optional embodiment, after obtaining the reference surface temperature, the method may first compare the preliminary LST of the at least one location point and the reference surface temperature and performs the calibration steps when the preliminary LST of the location point is different from the reference surface temperature, or when a difference between them exceeds a threshold. In this case, only when the measured LST deviated from the reference surface temperature obtained from weather model, the thermal satellite is calibrated, thereby avoid wasting of computational memories and resources.

Optionally, the reference surface temperature obtained from the weather model comprises reference surface temperature obtained from an atmospheric reanalysis dataset, preferably, the atmospheric reanalysis dataset comprises ERA5 dataset produced by European Center of Medium-Range Weather Forecasts (ECMWF) or Global Forecast System (GFS) dataset.

In an embodiment, the data acquired by the thermal satellite is a remote sensing image sensed by the thermal satellite, and the remote sensing image is sensed in real time. Thus, it is possible to enable real-time LST measurements with real-time calibration. The output LST product is directly the calibrated LST product which is more precise and reliable.

Preferably, before obtaining the reference surface temperature, the method may first filter the preliminary LST product to remove errors due to clouds and select the at least one location point where the preliminary LST is between the 25th and 75th percentile of a product distribution of the filtered product. In one embodiment, the at least one location point is selected from the filtered product by random sampling. With the additional filtering and selection, it is possible to exclude the errors introduced by cloud effects and outlier points, thus further improving the accuracy for the calculation of the amount to be calculated.

In one embodiment, the at least one location point comprises location points of a homogeneous surface with known emissivity. Preferably, the homogeneous surface may comprise large water bodies, desserts or ice fields and so on. When the location points used for calibration are selected from large homogeneous surface, the errors introduced by varying and inaccurate emissivity can be minimized, thereby, further improving the accuracy of the calibration.

As a further development of the present invention, to determine the calibrated radiance measurements, the method subtracts the calculated radiance measurements offset from initial radiance measurements acquired by the thermal satellite. As mentioned above, the offset calibration was performed to the radiance measurements instead of directly to the LST results, which enables the application of calibration offset over the whole LST product with surfaces of the different emissivity.

Optionally, to calculate the radiance measurement offset applied globally, the method proposes to calculate a radiance offset for each of the at least one location point. Specifically, the method may calculate an expected radiance measurement of the location point based on its reference surface temperature and then calculate the offset between the expected radiance measurement and an initial radiance measurement of the location point.

Preferably, the radiance offset of each of the at least one location point is calculated as a Euclidean distance between its expected radiance measurement and an initial radiance measurement. When the radiance is represented as complex numbers, the Euclidean distance is calculated as the offset.

In one embodiment, when only one location point is selected for the calibration, the method may calculate the offset for the only one location point and determine the offset of the location point as the radiance measurement offset to be applied globally. Alternatively, when multiple location points are selected for the calibration, the method may calculate offsets for each of the location points and determine an average value or a weighted average value of the offsets as the radiance measurement offset to be applied globally. In this case, by averaging the offsets at different location points, it is possible to eliminate random noise in the measured data and further improve the accuracy of the calibration. Moreover, by using a weighted average, it is possible to assign different weights to different location points of different importances or confidence levels to further improve the accuracy of the calibration. For example, the location points of homogenous surfaces may have higher weight.

Optionally, the expected radiance measurement of each location point may be calculated backwards according to the radiative transfer equation, based on the reference surface temperature, the emissivity of a surface of the location point and atmospheric correction parameters. The atmospheric correction parameters may include an upwelling radiance, a downwelling radiance, and an atmospheric transmittance. The radiative transfer equation may be the same as used to calculate the LST of the location point based on radiance measurements of this thermal satellite.

According to a second aspect of the present invention, an apparatus for calibrating a thermal satellite for measuring LST is provided, the apparatus comprising a calibration module which is configured to perform the steps of the method as disclosed above.

According to a third aspect of the present invention, a computer program product comprising instructions which, when the program is executed by a computer, cause the computer to carry out the steps of any of the methods as discussed above.

According to a fourth aspect of the present invention, a computer-readable storage medium comprising instructions which, when executed by a computer, cause the computer to carry out the steps of any of the methods as discussed above.

These and other aspects of the invention will be apparent from and elucidated with reference to the embodiments described hereinafter. Such an embodiment does not necessarily represent the full scope of the invention, however, and reference is made therefore to the claims and herein for interpreting the scope of the invention.

In the drawings

Fig. 1    schematically illustrates measurements of LST utilizing thermal satellites,

Fig. 2    schematically depicts a flow chart of the calibration method according to one embodiment of the present invention,

Fig. 3    schematically depicts a flow chart of the calibration method according to another embodiment of the present invention, and

Fig. 4    schematically depicts a block diagram of the calibration apparatus according one embodiment of the present invention

Exemplary embodiments will be described in detail herein, examples of which are shown in the accompanying drawings. Unless otherwise indicated, when the following description refers to the drawings, the same numbers in different drawings represent the same or similar elements. The embodiments described in the following exemplary embodiments do not represent all embodiments consistent with the present invention. Instead, they are merely examples of devices and methods consistent with some aspects of the present invention as detailed in the appended claims.

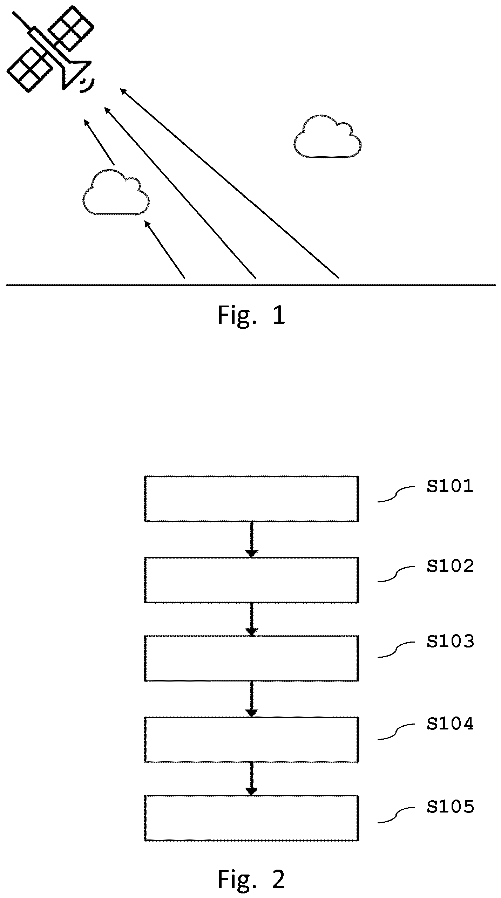

Fig.1 schematically illustrates the measuring of LST utilizing thermal satellites. As depicted in Fig. 1, the Earth's surface emits thermal infrared radiations as a result of its temperature. The wavelength at which maximum emission occurs varies roughly from 8 to 13 μm with the LST ranging from typically 250 K to 330 K. With an increase of the land surface temperature, the wavelength peak moves to shorter wavelengths. For example, in extreme cases of wildfire, the LST reaches 800 K, the maximum emission is around 3.6 μm.

To estimate the LST, thermal satellites measure the spectral radiance of the land surface via infrared sensors with appropriate wavelength windows. Usually, the radiance is sensed in the form of infrared images. Then, using radiative transfer equation (RTE) and assuming that the surface is a perfect emitter, i. e., blackbody, the spectral radiance response of the infrared sensors is converted into the brightness temperatures, i. e., radiance measurements, where the emissivity is fixed at 1.0. As further depicted in Fig. 1, since the spectral radiance responses are affected and altered by the surface material and atmospheric effects, it requires correcting for surface emissivity, atmospheric compositions, humidity and other factors. Usually, the atmospheric correction includes the upwelling radiance, the downwelling radiance, the atmospheric transmittance and so on. The LST product derived from the sensor response may contain an array of geolocated surface temperatures. The position of each element in the array corresponds to the geographic location sensed.

Fig. 2 shows a flow chart of a method for calibrating the LST measurements of the thermal satellite according to an embodiment of the present invention. As depicted in Fig.2, the method comprises the following steps:

S101: calculating a preliminary LST product $T$ based on data acquired by the thermal satellite,

S 102: for at least one location point included in the preliminary LST product $T$, obtaining a reference surface temperature $R_i$ of a same time from a weather model,

S103: calculating a radiance measurement offset d based on the reference surface temperature $R_i$,

S104: determining a calibrated radiance measurements $L_{corr}$ of the thermal satellite based on the radiance measurement offset $d$, and

S105: calculating a calibrated LST product $T_{corr}$ based on the calibrated radiance measurements $L_{corr}$.

The method can be computer-implemented and can be applied directly to a processor of the thermal satellite or to offline computational devices calibrating the thermal satellite in terms of LST measurements, for example, servers or distributed computational equipment.

The preliminary LST product $T$ is an array of the geolocated surface temperatures which may be calculated via any conventional LST retrieval algorithms, for example, single-channel methods, multi-channel methods, multi-angle methods and so on. The position of each LST element included in the product $T$ corresponds to a location point in the sensed land surface. In other words, the LST product $T$ may comprise LSTs of each location points sensed by the thermal satellite. The unit of the LST and reference surface temperature may be Kelvin (K). Similarly, the calibrated radiance measurements $L_{corr}$ and calibrated LST product $T_{corr}$ may also be arrays with calibrated radiance measurements and LSTs for all location points included in the preliminary LST products. In this term, the radiance measurement offset $d$ computed based on certain reference location points are applied globally to all locations included in the resolution of the thermal satellite.

In a specific embodiment, the preliminary LST product may be calculated via inverse of the Planck's law $B$ as depicted in equation (1):

$$ T = B^{-1}\left(\left(\frac{L - L_{up}}{\tau} - (1 - \epsilon) \cdot L_{down}\right) \cdot \frac{1}{\epsilon}, \lambda\right) \qquad (1) $$

wherein:

$L$ represents an initial spectral radiance measurements array sensed by the thermal satellite,
$\varepsilon$ represents the emissivity map of the surface containing emissivity of each location points,

$\tau$ is the atmospheric transmittance,

$L_{up}$ and $L_{down}$ are the upwelling radiance and downwelling radiances

$\lambda$ is the response wavelength

The preliminary LST produce may also be calculated by other LST retrieval schemes.

The reference surface temperature $R_i$ should be of equal location and time as the preliminary LST so as the eliminate the influence of different environmental and equipment conditions, like the temperature of part of the thermal satellite. Preferably, for robust calibration, more than one reference location point is selected, and it is recommended to select more than 5 reference location points.

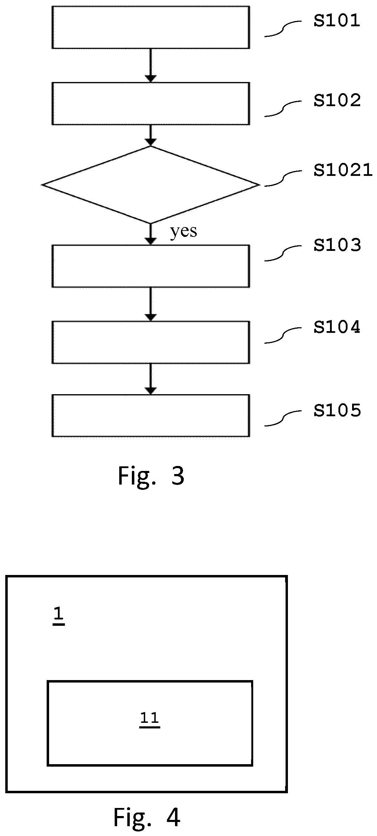

Fig. 3 depicts another embodiment according to the present invention. Compared to the embodiments shown in Fig. 2, after obtaining (S102) the reference surface temperature, the method comprises the following step:

S1021: for the at least one location point, comparing whether the preliminary LST of the location point $T_i$ and the reference surface temperature $R_i$ are different.

Only when it is determined that they are different, the method proceeds further the steps of calculating (S103) the radiance measurement offset $d$, determining (S104) the calibrated radiance measurements $L_{corr}$ and calculating (S105) the calibrated LST product $T_{corr}$ of the thermal satellite.

It can be understood that, when the preliminary LST of certain locations points is not equal to the reference surface temperature obtained from weather model, the absolute range of the LST measurement of the thermal satellite was disturbed and requires calibration.

In the alternative, step S 1021 may compute a difference between the preliminary LST $T_i$ and reference surface temperature $R_i$ of each location point, and proceed the subsequent steps (S 103, S 104 and S105) only when the difference exceeds a threshold, for example, 0.1 or 1 K. Of course, when multiple location points are selected, the subsequent steps may be performed only when an average difference or a mean squared error of the differences exceeds a threshold. The comparing of the two temperatures is optional and the calibration can be directly applied to each LST measurements to improve its accuracy and robustness.

In an embodiment, the reference surface temperature $R_i$ acquired from a weather model may be reference temperature $R_i$ acquired from an atmospheric reanalysis dataset. Preferably, the atmospheric reanalysis dataset comprises a ERA5 or GFS dataset. These consistent and comprehensive datasets are produced with modern numerical weather prediction models for a manifold of processes within the atmosphere. The models include the radiative transfer between different layers of the atmosphere, the interaction of the atmosphere with the surface, and the interaction of the atmosphere with the sun. The lowest layer in the model is used to represent the surface conditions of the Earth, and its temperature (so called skin temperature) is computed to solve the system of radiative transfer equations for the stratified atmospheric model. The surface temperatures obtained from these datasets are thus highly accurate and ideal to be utilized as reference temperatures in back calculation via radiative transfer equations.

Preferably, the data acquired by the satellite is a thermal remote sensing image sensed by the satellite, and the remote sensing image may be sensed in real time. In other words, the thermal satellite starts the calibration directly when an infrared image of the earth's surface has been sensed. In this case, the is applied to the thermal satellite measurements with same environmental and equipment conditions, which reduces the errors resulting from different statuses of the thermal satellite, different orbit positions and different atmospheric or ground conditions.

In addition, to improve the robustness of calibration method, it is proposed to eliminate the effect of clouds and outlier points. Thus, before obtaining the reference surface temperature, the method may further comprise the following steps:

S1011: filtering the preliminary LST product $T$ to remove errors due to clouds, and

S1012: selecting the at least one location point of which the preliminary LST $T_i$ is between the 25th and 75th percentile of a product distribution of the filtered product.

Preferably, the at least one location point ($T_i$, $i \in 1, ..., N$) is randomly sampled from the 25th and 75th percentile of the product distribution of the filtered product. The filtering to remove errors due to clouds can be conventional cloud filtering or screening technologies.

In addition to the filtering and randomly sampling, the locations points may be sampled or selected from location points of a homogeneous surface with known emissivity, which preferably comprises large water bodies, deserts or ice fields. It is because the temperature data from these surfaces has higher accuracy, consistency and reliability and the back computation of spectral radiance based on the temperature data is thus more reliable.

As discussed in the first embodiment of the present invention, the radiance measurement offset $d$ computed based on certain reference location points are applied globally to all locations included in the resolution of the thermal satellite. Specifically, this is implemented by the method following step:

S1041: subtracting the radiance measurements offset $d$ from initial radiance measurements $L$ acquired by the thermal satellite so as to obtain the calibrated radiance measurements $L_{corr}$.

The initial radiance measurements $L$ and calibrated radiance measurements $L_{corr}$ may be arrays containing spectral radiance data of all location points included in the remote sensing image. And the offset $d$ is subtracted from each element of the initial radiance measurements $L$ according to equation (2):

$$L_{corr} = L - d \qquad\qquad (2)$$

Correspondingly, the calibrated LST product $T_{corr}$ is then calculated (S105) based on the calibrated spectral radiance measurements $L_{corr}$ with emissivity and atmospheric corrections with the inverse of Planck's law $B$ as shown in equation (3):

$$T_{corr} = B^{-1}\left(\left(\frac{L_{corr} - L_{up}}{\tau} - (1-\epsilon)\cdot L_{down}\right)\cdot\frac{1}{\epsilon}, \lambda\right) \qquad\qquad (3)$$

Apart from the calibrated radiance measurements, the same parameters of equation (1) are applied.

The radiance measurements offset $d$ applied globally in equation (1) is calculated with respect to the reference location points based on the corresponding reference surface temperature $R_i$. According to an embodiment, the method further comprises the following steps:

S1031: calculating an expected radiance measurement $L_i^*$ based on the reference surface temperature $R_i$ for each of the at least one location point, and

S1032: calculating an offset $d_i$ between the expected radiance measurement $L_i^*$ and an initial radiance measurement $L_i$ of the location point.

Specifically, the expected radiance measurement $L_i^*$ of and the initial radiance measurements $L_i$ of each reference location points may be represented as complex values and the offset $(d_i)$ is calculated as a Euclidean distance between the expected radiance measurement ($L_i^*$) and the initial radiance measurement ($L_i^*$), as depicted in equation (4):

$$d_i = \|L_i^* - L_i\|_2, \qquad i \in 1, 2, \dots N \qquad\qquad (4)$$

Particularly, as introduced above, the method may sample or select any number of reference location points. In case that only one location point is selected, the method may comprise the step of:

S 1033 determining the offset $d_i$ of the location point as the radiance measurement offset $d$ to be applied globally.

Alternatively, when multiple locations points are selected or randomly sampled, the method may calculate an average value or weighted average value of the offsets $d_i$, $i \in 2, \dots, N$ and further comprises the step of:

S1034: determining the average value or the weighted average value of the offset of the least one location point as the radiance measurement offset $d$.

For the sake of robust, it is recommended to select more than 5 reference location points. In addition, it is also possible to select the offset of one location point as the global radiance measurement offset $d$.

In another embodiment, the expected radiance measurement $L_i^*$ of each location point may be calculated backwards according to Radiative Transfer Equation used for the calculation of LST. The expected radiance measurement $L_i^*$ may be calculated based on the reference surface temperature $R_i$, an emissivity $\varepsilon_i$ of a surface of the location point and atmospheric correction parameters applied to this location points which includes: the upwelling radiance $L_{up,i}$, the downwelling radiance $L_{down,i}$, and the atmospheric transmittance $\tau_i$.

Specifically, to calculate the expected radiance measurement $L_i^*$ of the reference location points, the method applies Planck's law B to estimate the spectral radiance $L_{bb,i}^*$ of a black body with the given reference temperature $R_i$ as

shown in equation (5):

$$L^*_{bb,i} = \frac{\int B(R_i, \lambda)\, f(\lambda)\, d\lambda}{\int f(\lambda)\, d\lambda} \qquad (5)$$

Then, the effect of emissivity and atmospheric conditions are further taken into account to calculate the expected radiance measurements $L^*_i$ of the sensor according to equation (6):

$$L^*_i = \tau_i \cdot \left( \epsilon_i \cdot L^*_{bb,i} + (1 - \epsilon_i) \cdot L_{down,i} \right) + L_{up,i} \qquad (6)$$

Then, the expected radiance measurements are applied to equation (4) for the calculation of the global radiance measurement offset d which is subsequently applied to equations (2) and (3) to calculate the calibrated radiance measurements $L_{corr}$ and calibrated LST $T_{corr}$.

Fig. 4 is a block diagram of an apparatus 1 for calibrating a thermal satellite for measuring LST, the apparatus comprising a calibration module 11 configured to perform the steps of any of the methods as disclosed above. The apparatus can be any device which is capable of computation. Preferably, the apparatus is capable of communicating with satellites and/or control the satellite. For example, the apparatus can be applied to a processor/microprocessor of the thermal satellite. The apparatus may also be computational devices for offline calibration of the thermal satellite in terms of LST measurements, for example, servers or distributed computational equipment.

In addition, the present invention further provides a computer program product comprising instructions which, when the program is executed by a computer, cause the computer to carry out the steps of the method according to any of the method above.

The present invention also provides a computer-readable storage medium comprising instructions which, when executed by a computer, cause the computer to carry out the steps of the method according to any of the method above.

Reference symbol list

1        calibration apparatus
11        calibration module
S101        method step
S102        method step
S103        method step
S104        method step
S105        method step
S1021        method step
S1011        method step
S1012        method step
S1041        method step
S1031        method step
S1032        method step
S1033        method step
S103 4        method step
$T$        preliminary LST product
$R$        reference surface temperature
$d$        radiance measurement offset
$L_{corr}$        calibrated radiance measurements
$T_{corr}$        calibrated LST product
$T_i$        preliminary LST product of $i$th location point
$Li$        expected radiance measurement of $i$th location point
$L_i$        initial radiance measurement of $i$th location point
$d_i$        offset of $i$th location point

$L^*_{bb,i}$        spectral radiance estimation of $i$th location point

$\varepsilon$        emissivity
$\tau$        atmospheric transmittance
$L_{up}$        upwelling radiance

$L_{down}$    downwelling radiance
$B$    Planck's law

## Claims

1. Method of calibrating a thermal satellite for measuring land surface temperature, LST, the method comprising:

   calculating (S101) a preliminary LST product ($T$) based on data acquired by the thermal satellite,
   for a location point included in the preliminary LST product ($T$), obtaining (S102) a reference surface temperature ($R_i$) of a same time from a weather model,
   calculating (S103) a radiance measurement offset ($d$) based on the reference surface temperature ($R_i$),
   determining (S104) a calibrated radiance measurements ($L_{corr}$) of the thermal satellite based on the radiance measurement offset $d$, and
   calculating (S105) a calibrated LST product ($T_{corr}$) based on the calibrated radiance measurements ($L_{corr}$).

2. Method according to claim 1, after obtaining (S102) the reference surface temperature, the method further comprising:

   for the location point, comparing (S1021) the preliminary LST of the location point ($T_i$) and the reference surface temperature ($R_i$), and
   performing the calibration (S103, S104, S105) when the preliminary LST of the location point ($T_i$) is different from the reference surface temperature ($R_i$), or when a difference between them exceeds a threshold.

3. Method according to any of the claims 1 or 2, wherein the reference surface temperature ($R_i$) obtained from the weather model comprises reference surface temperature ($R_i$) obtained from an atmospheric reanalysis dataset, preferably, the atmospheric reanalysis dataset comprises ERA5 or Global Forecast System, GFS, dataset.

4. Method according to any of the claims 1 to 3, wherein the data acquired by the thermal satellite is a remote sensing image sensed by the thermal satellite, and
   the remote sensing image is sensed in real time.

5. Method according to claims 1 to 4, before obtaining the reference surface temperature ($R_i$), the method further comprising:

   filtering (S1011) the preliminary LST product ($T$) to remove errors due to clouds,
   selecting (S1012) the location point of which the preliminary LST ($T_i$) is between the 25th and 75th percentile of a product distribution of the filtered product,
   preferably, the location point is selected by randomly sampling.

6. Method according to any of the claims 1 to 5, wherein the location point comprising:
   a location point of a homogeneous surface with known emissivity, which preferably comprises large water bodies, desserts or ice fields.

7. Method according to any of the claims 1 to 6, wherein determining (S104) the calibrated radiance measurements ($L_{corr}$) comprising:
   determining (S104) the calibrated radiance measurements by subtracting (S1041) the radiance measurements offset ($d$) from initial radiance measurements (L) acquired by the thermal satellite.

8. Method according to any of the claims 1 to 7, wherein calculating (S103) the radiance measurement offset ($d$) based on the reference surface temperature ($R_i$) comprises:
   for the location point:

   calculating (S1031) an expected radiance measurement ($L_i^*$) based on the reference surface temperature ($R_i$) of the location point, and

   calculating (S1032) an offset ($d_i$) between the expected radiance measurement ($L_i^*$) and an initial radiance measurement ($L_i$) of the location point.

9. Method according to claim 8, wherein the offset ($d_i$) is calculated as a Euclidean distance between the expected radiance measurement ($L_i^*$) and the initial radiance measurement ($L_i^*$).

10. Method according to any of the claims 8 and 9, wherein exactly one location point is provided, and wherein calculating (S103) the radiance measurement offset ($d$) based on the reference surface temperature ($R_i$) further comprises: determining (S1033) the offset ($d_i$) of the location point as the radiance measurement offset ($d$).

11. Method according to any of the claims 8 and 9, wherein calculating (S103) the radiance measurement offset ($d$) based on the reference surface temperature ($R_i$) further comprises:

    when multiple location points are provided,
    determining (S1034) an average value or a weighted average value of the offset ($d_i$) of the location point as the radiance measurement offset ($d$).

12. Method according to any of the claims 8 to 11, wherein the expected radiance measurement ($L_i^*$) of each location point is calculated backwards according to radiative transfer equation, based on the reference surface temperature ($R_i$), an emissivity $\varepsilon_i$ of a surface of the location point and atmospheric correction parameters, and wherein the atmospheric correction parameters include an upwelling radiance ($L_{up,i}$), a downwelling radiance ($L_{down,i}$), and an atmospheric transmittance ($\tau_i$).

13. Apparatus (1) for calibrating a thermal satellite for measuring LST, which comprises:
    a calibration module (11) configured to perform the steps of the methods according to any of the claims 1 to 12.

14. Computer program product comprising instructions which, when the program is executed by a computer, cause the computer to carry out the steps of the method according to any of the claims 1 to 12.

15. Computer-readable storage medium comprising instructions which, when executed by a computer, cause the computer to carry out the steps of the method according to any of the claims 1 to 12.

**Amended claims in accordance with Rule 137(2) EPC.**

1. Method of calibrating a thermal satellite for measuring land surface temperature, LST, the method comprising the following steps for calibration:

    calculating (S101) a preliminary LST product (T) based on infrared image data of the earth's surface acquired by the thermal satellite,
    for a location point included in the preliminary LST product (T), obtaining (S102) a reference surface temperature ($R_i$) of a same time from a weather model,
    calculating (S103) a radiance measurement offset (d) based on the reference surface temperature ($R_i$),
    determining (S104) a calibrated radiance measurements ($L_{corr}$) of the thermal satellite based on the radiance measurement offset d, and
    calculating (S105) a calibrated LST product ($T_{corr}$) based on the calibrated radiance measurements ($L_{corr}$),
    wherein calibration starts directly when real-time infrared image data of the earth's surface has been sensed to enable real-time LST measurements with real-time calibration.

2. Method according to claim 1, after obtaining (S102) the reference surface temperature, the method further comprising:

    for the location point, comparing (S1021) the preliminary LST of the location point ($T_i$) and the reference surface temperature ($R_i$), and
    performing the calibration (S103, S104, S105) when the preliminary LST of the location point ($T_i$) is different from the reference surface temperature ($R_i$), or when a difference between them exceeds a threshold.

3. Method according to any of the claims 1 or 2, wherein the reference surface temperature ($R_i$) obtained from the weather model comprises reference surface temperature ($R_i$) obtained from an atmospheric reanalysis dataset, preferably, the atmospheric reanalysis dataset comprises ERA5 or Global Forecast System, GFS, dataset.

4. Method according to claims 1 to 3, before obtaining the reference surface temperature ($R_i$), the method further comprising:

> filtering (S1011) the preliminary LST product (T) to remove errors due to clouds,
> selecting (S1012) the location point of which the preliminary LST ($T_i$) is between the 25th and 75th percentile of a product distribution of the filtered product,
> preferably, the location point is selected by randomly sampling.

5. Method according to any of the claims 1 to 4, wherein the location point comprising:
   a location point of a homogeneous surface with known emissivity, which preferably comprises large water bodies, desserts or ice fields.

6. Method according to any of the claims 1 to 5, wherein determining (S104) the calibrated radiance measurements ($L_{corr}$) comprising:
   determining (S104) the calibrated radiance measurements by subtracting (S1041) the radiance measurements offset (d) from initial radiance measurements (L) acquired by the thermal satellite.

7. Method according to any of the claims 1 to 6, wherein calculating (S103) the radiance measurement offset (d) based on the reference surface temperature ($R_i$) comprises:
   for the location point:

> calculating (S1031) an expected radiance measurement ($L_i^*$) based on the reference surface temperature ($R_i$) of the location point, and
>
> calculating (S1032) an offset ($d_i$) between the expected radiance measurement ($L_i^*$) and an initial radiance measurement ($L_i$) of the location point.

8. Method according to claim 7, wherein the offset ($d_i$) is calculated as a Euclidean distance between the expected radiance measurement ($L_i^*$) and the initial radiance measurement ($L_i^*$).

9. Method according to any of the claims 7 and 8, wherein exactly one location point is provided, and wherein calculating (S103) the radiance measurement offset (d) based on the reference surface temperature ($R_i$) further comprises:
   determining (S1033) the offset ($d_i$) of the location point as the radiance measurement offset (d).

10. Method according to any of the claims 7 and 8, wherein calculating (S103) the radiance measurement offset (d) based on the reference surface temperature ($R_i$) further comprises:

> when multiple location points are provided,
> determining (S1034) an average value or a weighted average value of the offset ($d_i$) of the location point as the radiance measurement offset (d).

11. Method according to any of the claims 7 to 10, wherein the expected radiance measurement ($L_i^*$) of each location point is calculated backwards according to radiative transfer equation, based on the reference surface temperature ($R_i$), an emissivity $\varepsilon_i$ of a surface of the location point and atmospheric correction parameters, and wherein the atmospheric correction parameters include an upwelling radiance ($L_{up,i}$), a downwelling radiance ($L_{down,i}$), and an atmospheric transmittance ($\tau_i$).

12. Apparatus (1) for calibrating a thermal satellite for measuring LST, which comprises:
    a calibration module (11) configured to perform the steps of the methods according to any of the claims 1 to 11.

13. Computer program product comprising instructions which, when the program is executed by a computer, cause the computer to carry out the steps of the method according to any of the claims 1 to 11.

14. Computer-readable storage medium comprising instructions which, when executed by a computer, cause the computer to carry out the steps of the method according to any of the claims 1 to 11.

Fig. 1

Fig. 2

S101

S102

S1021

yes

S103

S104

S105

Fig. 3

1

11

Fig. 4

# EP 4 722 670 A1

**EUROPEAN SEARCH REPORT**

Application Number

EP 24 20 4036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 970 376 A (AEROSPACE INFORMATION RESEARCH INSTITUTE CHINESE ACADEMY OF SCIENCES) 25 January 2022 (2022-01-25) * paragraphs [0008] - [0017], [0022], [0029], [0032] - [0034] * ----- | 1-15 | INV. G01J5/00 G01J5/80 |
| X | HU YONGHONG ET AL: "Absolute radiometric calibration evaluation of the thermal infrared spectrometer onboard SDGSAT-1", INTERNATIONAL JOURNAL OF DIGITAL EARTH, vol. 16, no. 2, 26 October 2023 (2023-10-26), pages 4492-4511, XP093254762, ISSN: 1753-8947, DOI: 10.1080/17538947.2023.2274418 * page 4496, paragraph 1 - page 4500, last paragraph * * page 4502, paragraph 1 - page 4503, paragraph 1 * * page 4504, paragraph 1 - page 4505 * ----- | 1,13-15 | |
| X | HULLEY GLYNN C ET AL: "Validation and Quality Assessment of the ECOSTRESS Level-2 Land Surface Temperature and Emissivity Product", IEEE TRANSACTIONS ON GEOSCIENCE AND REMOTE SENSING, IEEE, USA, vol. 60, 4 June 2021 (2021-06-04), pages 1-23, XP011897034, ISSN: 0196-2892, DOI: 10.1109/TGRS.2021.3079879 [retrieved on 2022-01-12] * page 2, right-hand column, paragraph 1 * * page 4, right-hand column, last paragraph - page 11, right-hand column, last paragraph * ----- | 1,13-15 | **TECHNICAL FIELDS SEARCHED (IPC)** G01J |

The present search report has been drawn up for all claims

| Place of search | Date of completion of the search | Examiner |
|---|---|---|
| Munich | 4 March 2025 | Jacquin, Jérôme |

EPO FORM 1503 03.82 (P04C01)

## ANNEX TO THE EUROPEAN SEARCH REPORT
## ON EUROPEAN PATENT APPLICATION NO.

EP 24 20 4036

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | Publication date | Patent family member(s) | Publication date |
|---|---|---|---|
| CN 113970376 A | 25-01-2022 | NONE | |

EPO FORM P0459

For more details about this annex : see Official Journal of the European Patent Office, No. 12/82